# EUROPEAN PATENT APPLICATION

(11) **EP 2 784 700 A2**
(43) Date of publication of application: **01.10.2014**
(21) Application number: 14000859.0
(22) Date of filing: 11.03.2014
(51) Int. Cl.: G06F 17/30

(54) **Integration of transactional and analytical capabilities of a database management system**

(30) Priority: 14.03.2013 US 201313828099
(71) Applicant: SAP AG, 69190 Walldorf (DE)
(72) Inventor: Biedenstein, Stefan, 69190 Walldorf (DE); Balzar, Andreas, 69190 Walldorf (DE); Falter, Timm, 69190 Walldorf (DE); Gruenhagen, Andreas, 69190 Walldorf (DE); Krannich, Bernd, 69190 Walldorf (DE)
(74) Representative: Müller-Boré & Partner Patentanwälte PartG mbB

(57) **Abstract**

Conventional approaches to transactional processing and analytics in database management systems have typically maintained a strict separation between these tasks, often resulting duplicate modeling, replication of data, usage of different infrastructure stacks, the need to integrate transactions and analytics on a layer that is very close to the end user, etc. Described herein are systems, methods, articles of manufacture, and the like relating to a central integration component that provides access to a core metamodel. Via the metamodel, metadata specify a data part of a business object and one or more information providers (e.g., an analytical view, an attribute view, etc.) that directly consume data from database tables underlying the business object. The central integration component responds to data access requests using the core metamodel.

## Description

### TECHNICAL FIELD

The subject matter described herein relates to integration of transactional and analytical capabilities of a database management system.

### BACKGROUND

Online transaction processing (OLTP) and online analytical processing (OLAP) are two potential applications in which high speed data processing can be useful. OLTP is typically used as part of operational day-to-day business of an organization that uses a business software framework (e.g., an enterprise resource planning solution, a customer relationship management solution, a sales force performance solution, etc.) in which many small and short transactions are executed in parallel and high throughput is required. Databases optimized for write access, such as a typical relational database management system (DBMS) with data organization in rows (row store), can be suitable for very detailed transaction data that must be up-to-date. In contrast, the analysis of operational data over a longer period of time to support decision-making is the more typical focus of OLAP operations. In general, OLAP queries are more complex and the level of detail required for the results is lower. The longer-running transactions associated with OLAP generally access only some of the columns in read mode.

In conventional database management systems, the use of separate systems for transactional processing and analytics has required duplicative efforts for an application developer. For example, duplicative modeling can be required, as can replication of data, usage of different infrastructure stacks, the need to integrate transactions and analytics on a layer that is very close to the end user (e.g., possibly even at the user interface level), etc. It is desirable to remove the necessity of having a completely separate database for analytics and reporting purposes, the former generally being computation intensive while the latter is typically read-intensive and focused on mass data.

Providing an existing transactional and analytical infrastructure in a single system would merely allow the usage of these disparate features without providing an application developer with a holistic, joint programming model that enables the seamless use of transactional and analytical aspects in one application without the need to deal with separate infrastructures.

### SUMMARY

In one aspect, a method includes defining metadata via a core metamodel to specify a data part of a business object and one or more information providers that directly consume data from at least one database tables underlying the business object, and providing access to the core metamodel via a central integration component of a database application. The one or more information providers include at least one of an analytical view and an attribute view. The central integration component receives an access request that includes at least one of a pure transactional request, an integrated transactional and reporting and analytical request, and a pure reporting request. The access request is responded to by providing access to the business object when the access request comprises the pure transactional request, implementing the one or more information providers as needed for interpreting only the metadata relevant to the access request when the access request comprises the integrated transactional and reporting and analytical request, and allowing direct consumption of the at least one database tables underlying the business object when the access request comprises the pure reporting request.

In some variations, one or more of the following features can optionally be included in any feasible combination. The core metamodel can define both entities and views and can offer a harmonized access to the entities and views. The core metamodel can be natively supported by a data dictionary-like functionality of a database access architecture. The core metamodel can include a definition of a data part of the business object and the one or more information providers. The core metamodel can include an extension for supporting one or more reporting and analytical scenarios. The core metamodel can include artifacts that are tenant-specific and therefore not visible from within other tenants in a multi-tenant environment.

Implementations of the current subject matter can include, but are not limited to, articles, systems, and methods including one or more features as described herein as well as articles that comprise a tangibly embodied machine-readable medium operable to cause one or more machines (e.g., computers, etc.) to result in operations described herein. Similarly, computer systems are also described that may include one or more processors and one or more memories coupled to the one or more processors. A memory, which can include a computer-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including but not limited to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to an enterprise resource software system or other business software solution or architecture, it should be readily understood that such features are not intended to be limiting. The claims that follow this disclosure are intended to define the scope of the protected subject matter.

### DESCRIPTION OF DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 shows a diagram of an example of a general architecture a stack capable of supporting transactional and reporting-centric data processing in one system without the need to replicate data between systems, according to an embodiment;
FIG. 2 shows a diagram of an example architecture illustrating features of an integrated analytical and transaction data stack, according to an embodiment;
FIG. 3 shows a data access diagram, according to an embodiment;
FIG. 4 shows another data access diagram, according to an embodiment;
FIG. 5 shows a diagram of an example of a metamodel that can be used as a common core metamodel, according to an embodiment;
FIG. 6 shows a process flow diagram illustrating aspects of a method having one or more features consistent with implementations of the current subject matter, according to an embodiment;
FIG. 7 shows a mapping diagram illustrating how a core metamodel can be mapped to the data access diagrams, according to an embodiment;
FIG. 8 shows a diagram of a domain model, according to an embodiment;
FIG. 9 shows a mapping diagram, according to an embodiment;
FIG. 10 shows a relationship diagram, according to an embodiment;
FIG. 11 shows a diagram illustrating an example of two summable key figures grouped by customer, according to an embodiment;
FIG. 12 shows a flow diagram illustrating an example sequence of aggregation execution, according to an embodiment;
FIG. 13 shows a diagram illustrating features of an example of exception aggregation modeling, according to an embodiment;
FIG. 14 shows a diagram illustrating features of an example of a master data table, according to an embodiment;
FIG. 15 shows a diagram of a hierarchy, according to an embodiment;
FIG. 16 shows a diagram illustrating an example of an external hierarchy structure, according to an embodiment;
FIG.17 shows a diagram illustrating features of a business software system architecture consistent with at least some implementations of the current subject matter, according to an embodiment;
FIG. 18 shows a diagram illustrating features of a database management system architecture consistent with at least some implementations of the current subject matter, according to an embodiment; and
FIG. 19 shows a diagram illustrating features of another database management system architecture consistent with at least some implementations of the current subject matter, according to an embodiment.

When practical, similar reference numbers denote similar structures, features, or elements.

### DETAILED DESCRIPTION

A programming model supporting integrated and/or embedded analytics is typically expected to have a strict separation between analytical content and (infrastructure) containers. Analytical content can generally be created by specific design tools consuming content of an underlying layer. Infrastructure containers can be data structures that contain references to relevant data. Containers generally have a name, a category, a type, etc. The programming model supporting integrated and/or embedded analytics is also typically expected to have vertically layered components decoupled through internal contracts which can, for example, define standard interfaces, formats, and protocols.

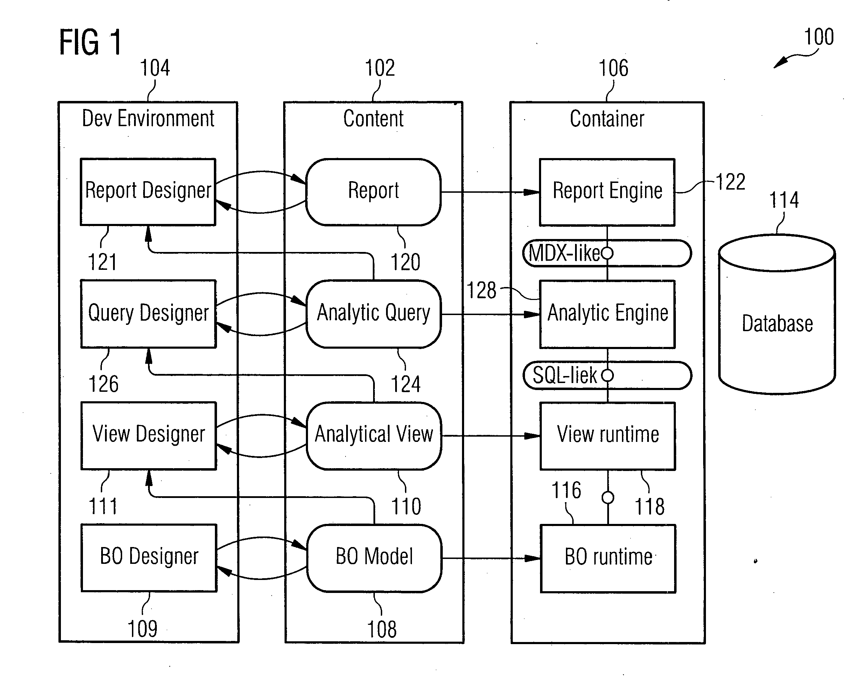

Implementations of the current subject matter can include features supporting the ability to perform both transactional and reporting-centric data processing in one system without the need to replicate data between systems. An example of a general architecture 100 of such a system (technology stack) is shown in FIG. 1 and includes content 102, a development environment 104, and one or more infrastructure containers 106. Core (transactional) business logic can be defined, implemented and executed using a business object (BO) model 108 defined by a BO designer 109 in the development environment 104. In a business software architecture that includes an enterprise services framework (ESF) or an enterprise services framework layer, core business logic can be implemented in an appropriate programing language, such as for example the Advanced Business Application Programming (ABAP) language or the Next Generation ABAP Platform. An analytical view 110 defined by a view designer 111 in the development environment 104 can represent a specific view on the regular BO model 108 as a flat data structure enriched with specific metadata and functionality, such as for example aggregation behavior or hierarchy handling. Such an analytical view can establish the basic semantics for analytical data integration and consumption (whether internal or external). A runtime access can, in some implementations, be similar in configuration to SQL.

If a programming model also provides or otherwise allows for SQL-like access on BOs, then the analytical runtime and the transaction metadata and runtime can advantageously be merged. The analytical view 110 can, in such an example, be a regular BO view. An analytic query 112 can add metadata, which can support a more cell-oriented (pivot table-like) consumption of the data as opposed to the row-oriented results of SQL. The access can optionally be similar in form or context to a multidimensional expression (MDX) language. The decomposition of complex MDX language requests into simpler SQL requests and the subsequent construction of the results set can generally result in a less than optimally efficient execution strategy. Advantageously, the technology stack 100 can be capable of optimizing across the SQL abstraction layer and translating certain requests directly into execution plans of the underlying database 114.

The deployment of such analytical content can, in principle, be rather flexible. The complete technology stack can be installed and run locally, which can advantageously support embedded analytics in some implementations of the current subject matter. However, if the runtime interfaces (e.g., a BO runtime 116 and a view runtime 118) are also remotely accessible, the content 102 generally can be deployed to the appropriate runtimes, even if they are not local. In various examples, a local report 120 defined by a report designer 121 in the development environment 1-04 can be deployed centrally where the same report engine 122 is in place. An analytic query 124 defined, for example by a query designer 126 in the development environment 104 on a local analytical view 110, can also or alternatively be deployed to a central hub with the same analytic engine 128, and can run from there remotely against the analytical view 110, centrally against a structure-identical one, etc. Local analytical views 110 can also be physically deployed to another system.

An analytics architecture having features in common with the architecture 100 of FIG. 1 can define a conceptual view on a provided or consumed analytical infrastructure realizable by existing and to be developed components. Communication channels introduced by the analytics architecture can be reduced to different contracts for integrating the participating components, for example one for data integration and two for user interface (UI) consumption of analytical data. The contracts can define standard interfaces, formats, and protocols. An analytics data provisioning service can rely on a uniform approach for extracting data from business applications. Possible methods for data extraction can include, but are not limited to, replicating data from the application and storing it in integrated centrally stored analytical models, for example by loading either all data or an initial load followed by one or more delta requests; directly accessing the business application for a specific data request, either initiated by a named user in a federated scenario or for fetching just the latest data records for an integrated centrally stored analytical model; or the like.

Internal application programming interfaces (APIs) can optionally include operational data providers (ODPs). The public protocol can optionally be based on the open data protocol (OData). The specification for public extract, transform, and load operations can, in some implementations, be part of the OData4SAP Analytics Spec provided by SAP AG. Analytics consumption services can rely on a unified, rich, stateful protocol, which can be suited for highly interactive and possibly data-intensive use cases, and can also provide full content discovery capabilities.

Conventional platforms and applications have generally included a relatively strict separation of the OLTP-based access from the OLAP-based access although both forms of access significantly overlap both content-wise and conceptually. This separation is typically rooted on the database layer where the different characteristics for accessing data in an optimal way has typically been resolved using a dedicated secondary persistence, which can optimized for one or the other of analytical and read (e.g., transactional) access. In addition, separate technology stacks, concepts, and programming models between OLTP and OLAP can, in conventional approaches, lead to high total costs of deployment or ownership (TCD or TCO), very limited flexibility to tightly combine OLTP and OLAP capabilities, and the like. For example, conventional approaches can require that data modeling be re-done for OLAP, thereby requiring redundant metadata and different development environments; that duplicate, incompatible infrastructures (e.g., more than one infrastructure to "accomplish the same goal") be provided by the technology platform and understood by consumers; that different and/or separate skill sets be developed, thereby leading to a high learning curve and fostering potential inconsistencies; and that scenarios combining characteristics of both the OLTP and OLAP "worlds" can be difficult to realize.

Such drawbacks of conventional approaches can be mitigated or even eliminated by basing OLTP and OLAP technology stacks on the same core model and concepts. Further advantages of bringing the OLTP and OLAP technology stacks closer together can include, but are not limited to, establishing a single, harmonized view-building concept covering the transactional and analytical requirements. This feature can allow enrichment of a transactional view with additional metadata to also act as an analytical view and therefore to inherit authorization, consistency checks, write-back and actions. Furthermore, representing views as "native entities" in a data dictionary (DDIC) can allow accessing views via a core infrastructure (e.g., an ABAP infrastructure, a NGAP infrastructure, or the like). An optimized programmatic consumption can be offered by leveraging a native infrastructure to work with analytical models. For example, reuse of standard mechanisms (e.g., ABAP Query Language (ABQL) in ABAP, native ABAP/DDIC views, or the like) to consume analytical data can ensure a low TCD as the developer already knows these mechanisms from the transactional programming model. In addition, standard, commercially available (e.g., "out-of-the-box") list reporting on master data, headers/items, balances (including for example sorting, filtering, totals/subtotals) can be supported, and analytical capabilities (hierarchy handling, key figure calculation, conversions) can be used within the business/transactional logic, for example for preparing data for internal processing.

Removal of the classical separation of OLTP and OLAP, for example by avoiding data replication for OLAP-only purposes and by offering native, "real time" OLAP capabilities, can be desirable. Implementations of the current subject matter can include features relating to removing or mitigating such separations and providing a more integrated, single approach to providing both types of functionality.

Depending on the type of software product offering within which a database system is included, analytics support can be based either on a BO programming model or on other applications that are not characterized as 100% BO applications. Some examples can include business warehouse products; internal frameworks and tools or a software platform developer; applications or features built by customers of a core software architecture suite build external to the core software platform; technical features such as maintenance views, repair reports, and the like; etc. To offer a consistent model across BO-based and non-BO based applications/products, harmonization of such scenarios on a common basis and exposure of the harmonized and integrated model through all "higher-level" layers can be necessary.

Tight integration of OLTP with OLAP capabilities can present several challenges within an application. In an illustrative example of such challenges, a developer creating an application that provides an overview about cost centers may wish to include capabilities such as allowing details of cost centers to be displayed on the level of single instances and also grouped along a "Region" (or comparable) hierarchy including calculation/visualization of aggregated values along the hierarchy nodes. Additionally, it can be desirable to include the actual costs (for example, in a list reporting scenario), the planned costs (e.g., the results of an analytical "planning run"), and the result of the plan/actual comparison (e.g., an analytical functionality) for one or more cost centers, hierarchy node, or the like. Using currently available approaches, the developer can face a number of challenges even under the assumption that the actual and plan data are maintained in a same database table. For example, the developer can be required to use different view building technologies to prepare the data for consumption in the UI. For example, view building in the transactional part (e.g., showing actual costs) can optionally be done via a list viewer, while view building for the analytical part can more typically be accomplished using search and analytical models, a multi-dimensional analytical view (MDAV), or the like.

According to a conventional approach, a lowest level of the example application discussed in the preceding paragraph generally features frameworks for transactional and analytical processing that can operate with different (even though semantically close or ideally identical) notions of data types. To allow work on hierarchies, duplicate logic is typically implemented. While predefined hierarchy support is typically provided by the infrastructure for the analytical part, hierarchy handling for the transactional aspects often requires manual implementation because analytical hierarchy models are often unable to be consumed from within the transactional frameworks. Consistency checks defined for transactional processing also are typically incapable of being reused by the analytical planning engine because such an engine typically operates on different data models. Such consistency checks therefore can require "re-implementation" for use in a planning or other analytical scenario. Similar issues typically apply to usage of buffers, locking, queuing, authorizations, etc. that cannot be shared between the transactional and the analytical engines. In such cases, a developer can be forced to define, implement, etc. all these aspects twice and also to manually ensure consistency between both definitions, implementations, or the like.

Other issues with conventional approaches can arise in that predefined UI building blocks are typically either purely transactional (working only with the transactional models and engines) or purely analytical (working only with the analytical models and engines). Therefore, a UI design often cannot be implemented with the standard UI building blocks but requires a custom UI building block or the like. Furthermore, an application developer can be required to maintain even more redundant metadata to define the navigation between the transactional and analytical worlds. Strict separation into purely transactional and purely analytical UI building blocks can also lead to high overhead in the UI framework development, as in many cases duplicate implementations of UI building blocks are required due to the technical restrictions even though a large fraction (e.g., 80% or more in some examples) of the functionality is generally equivalent.

One or more of the aforementioned issues with currently available approaches can be addressed consistent with one or more implementations of the current subject matter. Other advantages not discussed here can also be realized in addition to or instead of those mentioned. Consistent with implementations of the current subject matter, a harmonized transactional and analytical framework can be provided for use in a database framework or architecture, which can include, but is not limited to, an enterprise resource planning (ERP) system or program, a database management system, etc. Analytics support can be integrated natively into the core software (e.g., an ABAP or NGAP) infrastructure framework. Such a framework can include a common metamodel to describe transactional and analytical aspects for the same data and one or more of a common tooling on top of this metamodel, harmonized view building mechanisms, harmonized query languages, and the like.

Features of a framework consistent with implementations of the current subject matter can optionally provide optimization of at least one and advantageously both of TCD and TCO by providing a single, unified approach for both analytical and transactional logic, consolidation of different embedded analytics offerings, offering of value-adds to enterprise data warehouse (EDW) scenarios (e.g., because an EDW model can more easily be derived based on the local models in the application backend because a data dictionary can contain the complete metadata for both inbound and outbound operational data provisioning and developers in an EDW system can use native programming language constructs to work with information providers, calculated fields, key figures, etc.).

To allow tight integration of analytical offerings into current available transactional data frameworks, implementations of the current subject matter can be provided on a common layer used by all of such scenarios. In some examples, the common layer can be a native programming language level, such as for example an ABAP or DDIC level to allow usage both by BO-based applications and also by applications which are not fully based on BO technology (e.g., ETL, mass updates, etc.). Native support in a language or framework such as ABAP or DDIC can also be necessarily propagated through "higher-level" layers, such as for example a metadata repository system, a BO programming model, a consumption model (e.g., Oberon), or the like, to allow BO-based applications to leverage the advantages. High-level database view models should also be available for consumption via an associated infrastructure (e.g., NGAP, ABAP, etc.) without losing metadata to ensure leveraging of advanced features and to avoid duplicate implementations.

Providing one harmonized model to define entities (e.g., data objects, etc.) and views and to offer harmonized access to views and entities can be a further advantage of some implementations of the current subject matter. Having this common model for entities and views can also allow "consumers" of this model to leverage it, for example through consumption of new capabilities (e.g., hierarchies and aggregation support) via an advanced query language, by providing an ODP implementation exposing the enriched DDIC models as transient info providers, by showing how current list-like reports and current analytical reports can be handled within one application without redundant work for the developer, by showing that other tools can consume the info providers and produce "meaningful" results and the default data models, etc.

Implementations of the current subject matter can provide common mechanisms to define and interpret metadata of the underlying data structures; to access the data via queries, view-building, and the like across transactional and analytical scenarios; etc. In some examples, core infrastructure components (e.g., in an ABAP environment, DDIC, ABQL, etc.) can provide the common basis for all scenarios and extending them accordingly to fulfill the needs. Furthermore, an incremental push-down of ABAP concepts to native database concepts/implementations can be channeled via these core ABAP infrastructure components. Therefore the ABAP (or other) infrastructure advantageously is capable of representing analytical database artifacts in ABAP without losing semantics/metadata.

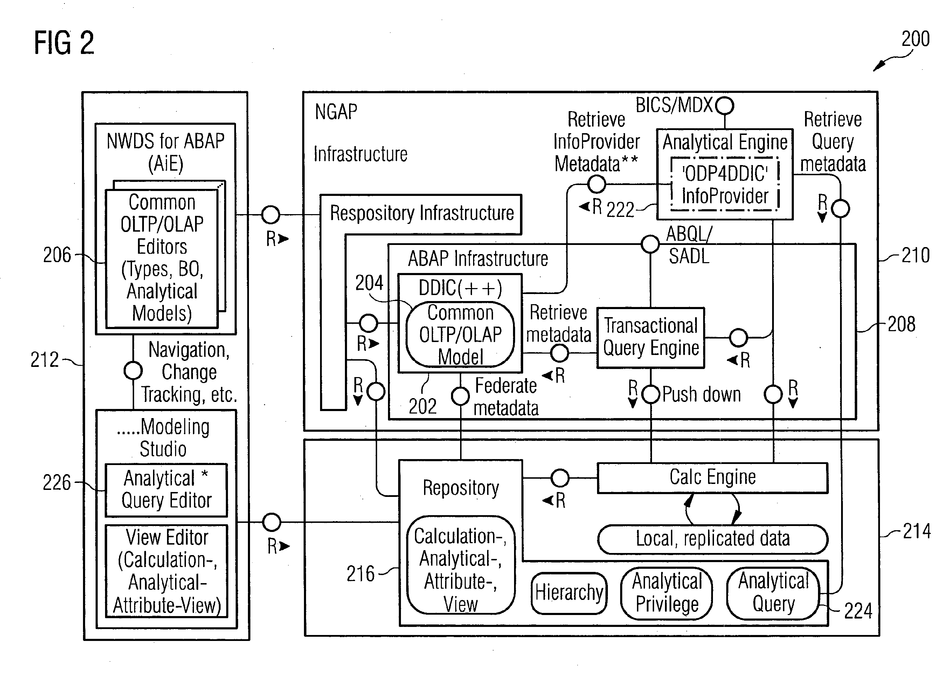

FIG. 2 shows an example architecture 200 illustrating features of an integrated analytical and transaction data stack that are consistent with implementations of the current subject matter. As shown in FIG. 2, a central integration component 202 can maintain the metadata that is needed for the runtime processing of the transactional and analytical engines (OLAP, Planning). In some implementations based on ABAP, NGAP, or the like, this central component 202 can be a data dictionary (DDIC) and can optionally be extended towards an in-memory enhanced data dictionary (DDIC++). This central integration component 202 can provide a single, common analytical and transactional (e.g., OLTP/OLAP) metamodel 204 across transactional and analytical scenarios, which can allow defining of the data-part of business objects and the transient informational providers (respectively analytical and attribute views) in one place. In this manner, a potentially large overlap between both scenarios (like the relevant metadata itself, metadata access with high performance, view building, hierarchy handling, calculations and aggregation, integration with database artifacts/push down, etc.) can be leveraged to realize increased advantages.

Content following a common analytical and transactional metamodel 204 consistent with implementations of the current subject matter can be created via dedicated editors 206 in an ABAP infrastructure 208, a NGAP infrastructure 210, or other programming frameworks using a tool integration platform 212 or by importing database model definitions into the programming framework(s) 208, 210. Both approaches to creating content can feature referencing of corresponding "first class" entities in the database 214 without losing semantics. Therefore the central integration component 202 can be well integrated with the database repository 216 to generate database models based on the content of the central integration component 202 or vice versa.

For transactional queries, a transactional query engine 220 can advantageously be consumed via a query language (for programmatic access) and via model-driven database queries (e.g., a semantic application design (SADL) query) (for declarative access). Analytical queries (for example via Business Intelligence Consumer Services (BICS) or MDX) can be processed by an analytical engine 222 supported by the programming framework(s) 208 or 210 (e.g., ABAP, NGAP, etc.), which can require dedicated analytical queries for its processing in addition to cube or view metadata as can be provided by the central integration component 202 (e.g., a DDIC, DDIC++, or the like). The analytical query engine 222 can retrieve the relevant metadata both from the central integration component 202 (e.g., from the DDIC++ for analytical view and analytical cube models) and from a specialized persistency for the analytical query definitions 224, which can be part of the database repository 216. In addition, a dedicated analytical query editor 226 can be provided in the tool integration platform 212 to manage analytical query definitions. Both the transaction query engine 220 and the analytical query engine 222 can advantageously push down as much processing logic as possible to the database 214 and/or to the database repository 216.

An OLAP/OLTP convergence as described herein can be based on a common approach to defining and interpreting metadata of the underlying data structures. This common metamodel 204 can be applicable to pure transactional scenarios which are implemented completely via a set of business objects; for integrated ("OLTAP") scenarios, in which both the transactional and the reporting/analytical aspects can be defined (and the respective transactional analytical consumption scenarios interpret only those parts of the metadata relevant for the scenario) for a same data structure; pure reporting or warehousing scenarios, in which only the analytical consumption view is relevant and which does not necessarily depend on transactional models like the business object model but more or less directly consumes the underlying database tables; and the like.

A common OLTAP/OLAP metamodel 204 (also referred to herein as a common core metamodel 204) as described herein can optionally be natively supported by DDIC++ or other data dictionary-like functionality of a database access architecture. The common OLTAP/OLAP metamodel 204 can allow defining both the "data-part" of business objects and the (optionally transient) information providers (respectively analytical and attribute views) in one place.

Entities and aspects required for the basic processing infrastructure for data access and manipulation across purely transactional, integrated (e.g., "OLTAP") and purely reporting or warehousing functionality can be defined via a common core metamodel 204. The scope of the common core metamodel 204 can therefore be mainly on the data definition part. Via semantic enrichment, one or more semantic concepts (e.g., date and time, currencies and quantities, languages and texts, etc.) can be explicitly supported in the programming model and more or less standardized across all applications in the ABAP (or other programming framework) domain space. Aspects that allow modeling the consumption view on the core data structures that is needed for reporting or analytical scenarios can be defined via one or more reporting and/or analytical extensions. At least some of these aspects can also be offered for transactional (OLTP) access, such as for example hierarchy handling, aggregation support, or the like. Processing of these extensions can either take part via query language processing (for simple reporting and pure transactional scenarios), within the analytical query engine 222 (e.g., for more sophisticated analytical scenarios), or the like.

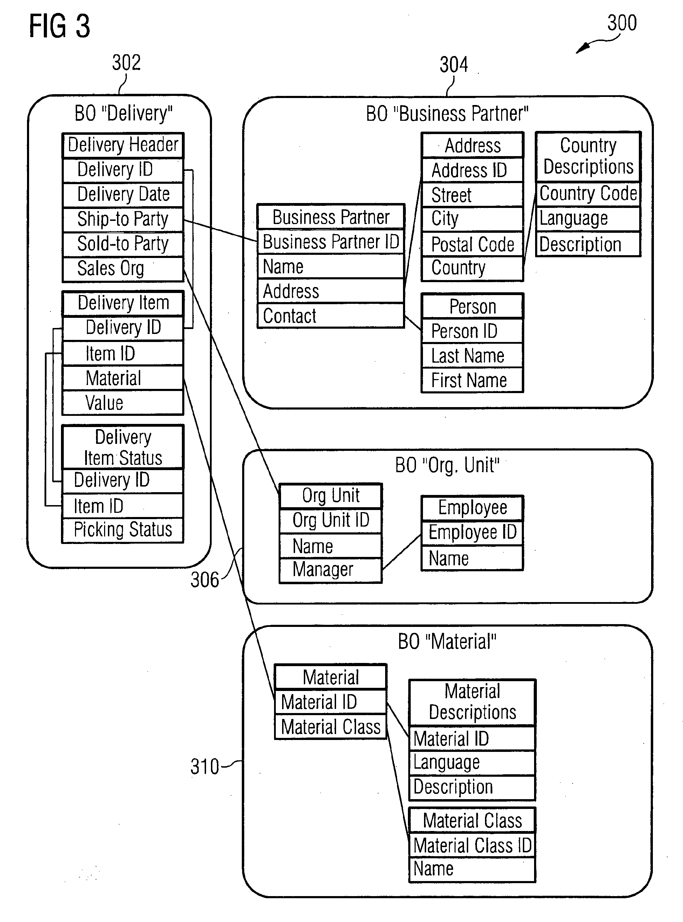

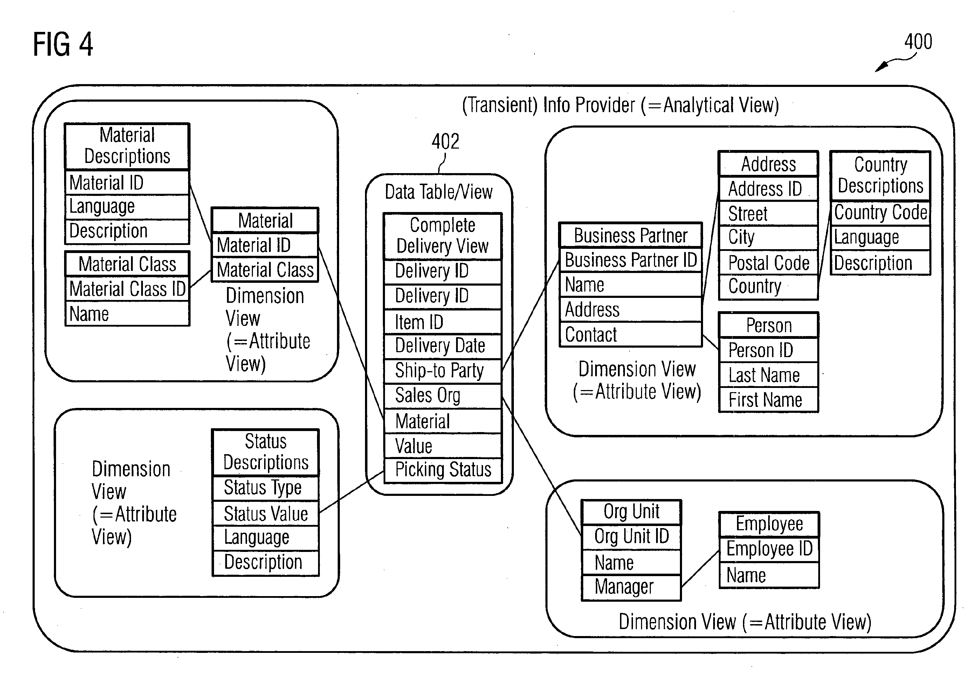

A common core metamodel 204 consistent with implementations of the current subject matter can focus on the data (model) definition part, which can be used by the core runtime(s) for data access and data management (e.g., for covering data manipulations, calculations, querying and view building) both in transactional and analytical scenarios. As the transactional and the analytical paradigms are typically different views on the same data, this model is advantageously sufficiently flexible to map both views to the same core artifacts. FIG. 3 and FIG. 4 show two data access diagrams 300, 400 respectively illustrating an example of the same data being used and represented for transactional and analytical access.

In the analytical view 400, the three nodes/tables of the "Delivery" business object 302 (which are in turn extracted from a "Business Partner" business object 304, an "Org. Unit" business object 306, and a "Material" business object 310) from FIG. 3 have been combined within a dedicated data table/view 402. The other nodes, tables, etc. shown in FIG. 3 are the identical for both consumption scenarios. In some scenarios, the same or similar nodes, tables, etc. can be consumable in both transactional and analytical scenarios without forcing the developer to create dedicated "(view) objects" for both scenarios.

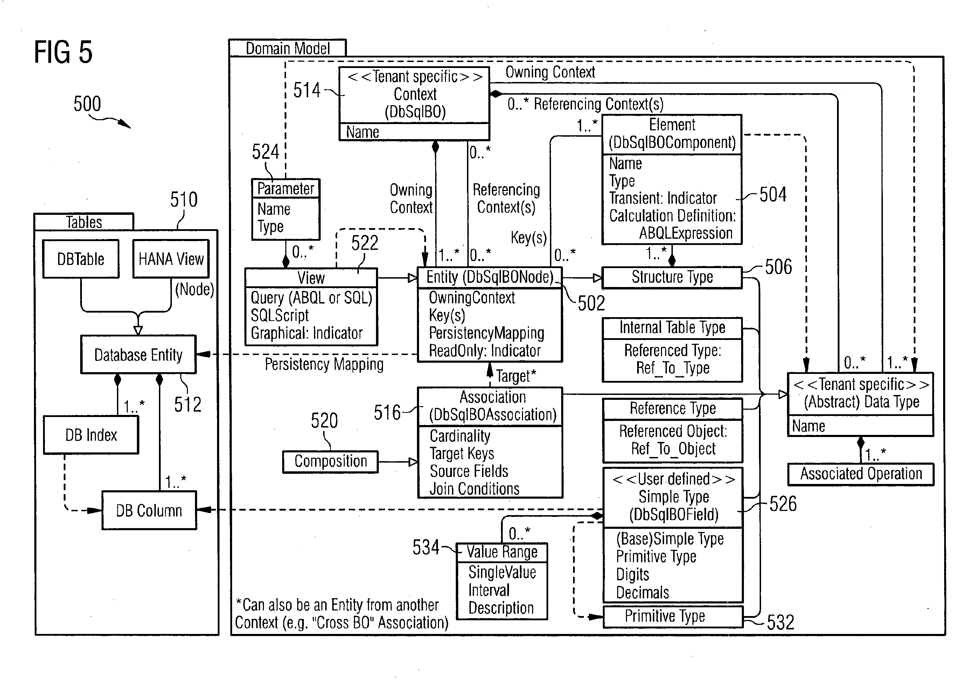

FIG. 5 shows a diagram of an example of a metamodel 500 that can be used as the common core metamodel 202 discussed above. As shown in FIG. 5, an entity 502 can include one or more structured records of one or more elements 504, which are inherited from a structure type 506. The entity can also be mapped to underlying database tables in a database or repository 510 or any other kind of database artifact with relational, i.e. tabular signature, such as for example dedicated nodes of views (e.g., analytical views). A concrete mapping to a database entity 512 can be defined via a persistency mapping attribute. The entity 502 can be identified by a primary key, which can be formed from a subset of an entity's elements 504, and can be logically grouped into a context 514. Each entity 502 can have exactly one owning context, which specifies the application context that primarily defines that entity 502 (e.g., a business object, an information provider, a transient information provider, a RDL/DDL resource file, etc.). For transactional scenarios, an entity can be either a BO node or a transactional view. In analytical scenarios, an entity can be one of a "data" entity (e.g., transactional data or master data), a "Text" entity, an (external) "hierarchy structure" entity, or the like.

Further with reference to FIG. 5, the one or more elements 504 can include attributes specified with a name and a type (e.g., primitive, simple, structured, etc.), associations as navigational definitions of relationships, transient attributes (which can optionally be calculated), a "without calculation" expression (which can be created in a result set and expected to be filled by some application logic afterwards, a "with calculation" expression (which can be filled during query execution and its type inferred), and the like.

A semantic implemented via a "Ref-Field" attribute in a conventional DDIC can also be realized via transient (e.g., calculated) attributes. A "Ref-Field" attribute can allow an element to be associated to another element that is required to precisely specify the semantics respectively to properly interpret the content. As an example, if an entity has multiple "Amount" structures, the "Ref-Field" allows defining that all these "Amounts" have to have the same "Currency Unit" by letting them reference the same "Currency Unit" element. In a metamodel 204 as discussed herein, a corresponding expression can be defined (e.g., via a calculation definition attribute).

As shown in FIG. 5, associations can include special types of elements, and can specify a relationship to a target entity. Associations can also include join conditions specifying how the relationship is established. Compositions 520 can be special types of associations 516 with existence-dependent targets. Views 522 can be derived from other entities, for example via view building techniques that can include projection or joins, which can be defined via a query in a query language. Views 522 can be entities themselves, and can therefore be subject to view building in a recursive fashion. Views can optionally be associated with a database view, a calculation view, an analytical view, an attribute view, a hierarchy view, or the like for optimization and/or database-level availability. A view can be consumed via its relational signature without using/interpreting an internal view structure and metadata (in such a case the view can be represented as a single entity) or by directly exposing the complete metamodel of the analytical view to the core software platform (e.g., ABAP or the like). In this second case, the analytical view can include multiple entities (e.g., an attribute view can be represented as a dedicated context that consists of one or more dimension node and text entities; an analytical view can include one or more attribute views plus a data or foundation entity, etc.). A view 522 can be generated out of the view definition query or imported from the repository 510. A view 522 can have one or more input parameters 524 that allow passing of consumer-specific contexts to influence the view execution. Examples of input parameters 524 can include passing of a time zone for time-dependent conversions, passing of a currency code to execute currency conversions, or the like.

A context 514 can group related entities and views and/or data types. For example, a context 514 can represent entities such business objects, transient information providers, respectively, in analytical views, attribute views, etc. In addition, a context 514 can represent a core data services / data definition language CDS/DDL resource defining one or more data types, entities, views, etc. A context 514 can include a designated root entity, for example with the other entities arranged in a composition hierarchy below. A context can be used as a coarse-grained container for life cycle management operations.

Data types can mainly be differentiated into simple types 526, structured types 506, and associations 516 as described before. These types can be assigned to elements of an entity 502. In addition, primitive types 532 such as "INTEGER", "FLOAT/DECIMAL" or "CHAR/NVARCHAR" can be offered as a basis for defining simple types 526. Primitive types 532 can map directly to SQL types. Furthermore, it can be possible to define reference types (which allow reference to, for example, ABAP classes or interfaces) or table types (which reference a primitive type 532, a simple type 526, or a structured type 506). Simple types 526 can be user-defined types combining the existing DDIC concepts of data elements, domains, column descriptors, etc. into one artifact. Simple types 526 can be defined by directly specifying the underlying primitive type, digits, decimals, and the allowed value ranges 534 (being either single values or intervals). Value ranges 534 can be used to define enumeration types. A simple type 526 can also be defined by specifying another simple type being used as the basis to allow reuse on a technical level while offering the option to enrich the base type definition with context-specific semantics, like value ranges, being defined in the "surrounding" type. Predefined simple types can be offered for semantics and standardized across multiple applications produced by a single developer organization (e.g., a vendor or development of enterprise resource planning software.

Main artifacts in the core metamodel 204 can be tenant-aware, meaning that instances of these artifacts can be tenant-specific and are therefore not visible from within other tenants in a multi-tenant environment (described in more detail below). Tenant-aware artifacts can include types and contexts (and all depending artifacts within a context).

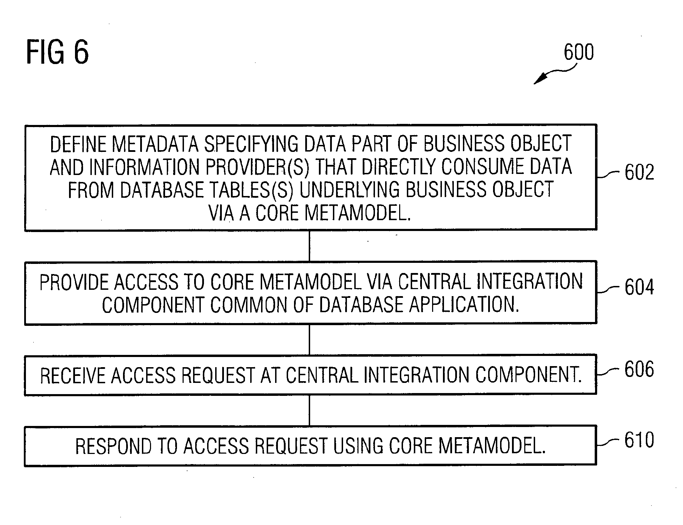

FIG. 6 shows a process flow chart 600 illustrating method features, one or more of which can be included in implementations of the current subject matter. At 602, metadata specifying a data part of a business object and one or more information providers that directly consume data from at least one database table underlying the business object are defined via a core metamodel. The one or more information providers include at least one of an analytical view and an attribute view. At 604, access to the core metamodel is provided via a central integration component common of a database application. An access request is received at the central integration component at 606. The access request includes at least one of a pure transactional request, an integrated transactional and reporting and analytical request, and a pure reporting request. At 610, the access request is responded to using the core metamodel, such that the responding includes providing access to the business object when the access request includes the pure transactional request, implementing the one or more information providers as needed for interpreting only the metadata relevant to the access request when the access request includes the integrated transactional and reporting and analytical request, and allowing direct consumption of the at least one database table underlying the business object when the access request includes the pure reporting request.

The remainder of this document describes various examples of features, functionality, structures, etc. that can optionally be included within one or more implementations of the current subject matter. None of the following discussion should be construed as limiting the scope of the current subject matter, except to the extent that it appears explicitly in the claims.

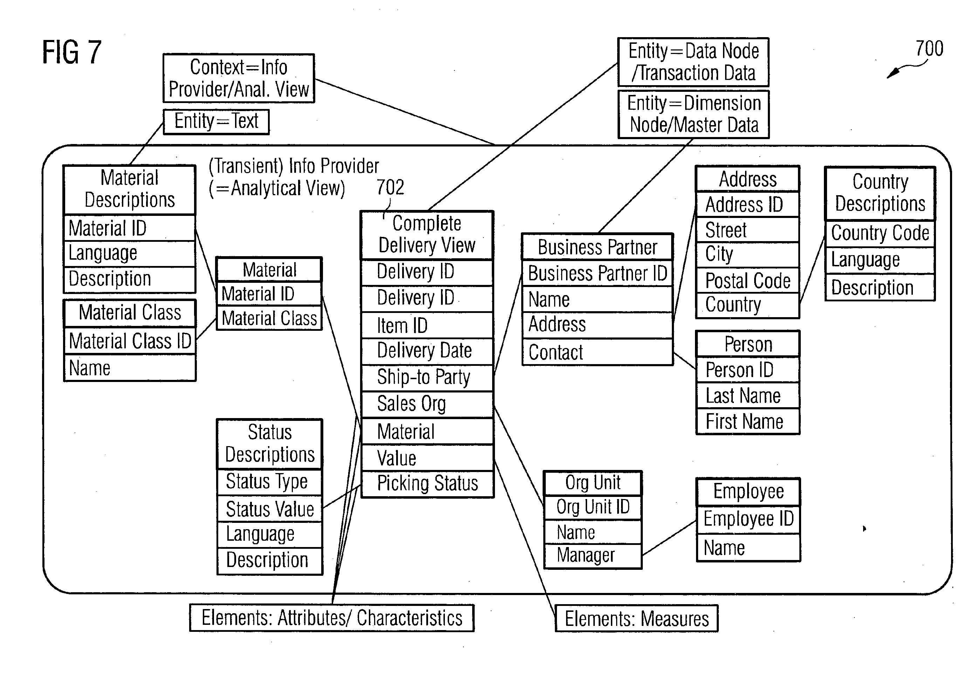

FIG. 7 shows a mapping diagram 700 illustrating how a core metamodel 204 can be mapped to the data access diagrams 300, 400 shown in FIG. 3 and FIG. 4, respectively. Examples of core artifacts such as context, entity and element and their different semantics for the respective transactional and analytical consumption views are illustrated in relation to a complete delivery view 702 that can draw upon business objects, nodes, tables, etc.

A dictionary type approach, such as for example one similar to those provided in an ABAP framework or other business software platform, can focus on technical types whose semantics do not match the full extent of application requirements. To allow for types with a clear semantic beyond purely technical aspects, abstract data types (ADTs) can be used in some implementations of the current subject matter. An ADT type definition can include not only the value's representation in-memory and on the database but also named operations that can be executed on values of this type. In this manner, consumers can easily locate the relevant operations on the type. Each operation can have additional parameters and possibly different implementations, for example, one for ABAP (or another core software platform) and another for the database.

An ADT is generally not a core software platform (e.g., ABAP) object. Rather, an ADT can add value-semantics or the like to wrap elementary types such as integers or strings and have value-semantics. In other words, if an instance of such an ADT is moved from one variable to another, changing the value in one variable does not affect the value of the other variable as would be the case with references. An ADT can be used in an ABAP Dictionary. For example, an ADT based on one or more elementary types can be used as the type of fields of database tables and structured ADTs can be included into database tables. Sufficiently simple operation implementations can be directly (that is, without a method call) inlined with the invoking statement and thus be executed very efficiently.

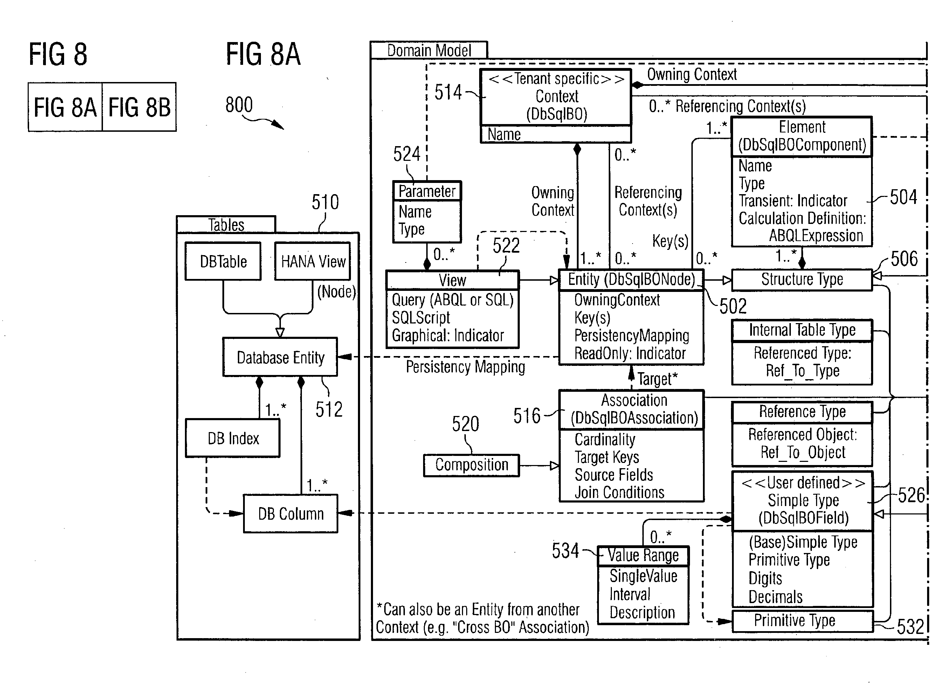

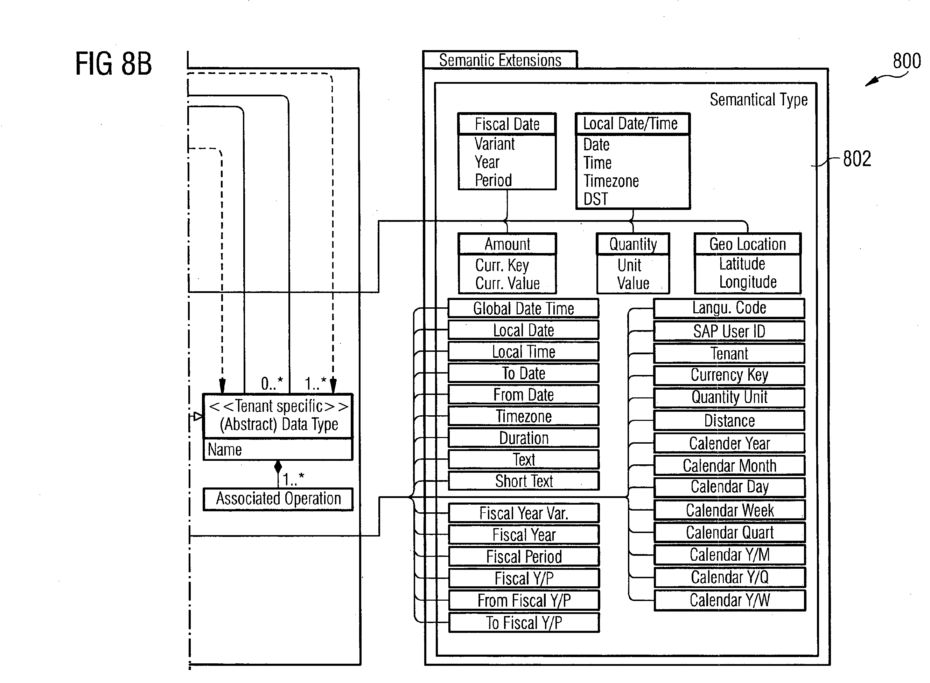

Implementations of the current subject matter can support a variety of standard or core semantics, such as for example date and time, currencies and quantities, languages and texts, users, tenants, locations, etc. A core semantic can be attached to an element by using exactly one core data type for the dedicated purpose (carrying the semantics), by annotating the semantics on element level, or the like. Semantics can be expressed by offering dedicated data types per semantics. Using data types in this manner can help the infrastructure (e.g., the application server, the business software framework, etc.) to better ensure precision and correctness. FIG. 8 shows a diagram of a domain model 800 that includes a listing of simple types 526 and structured types 506 that can be relevant, for example in analytical/reporting scenarios. Such semantic types can be provided by semantic expressions 802.

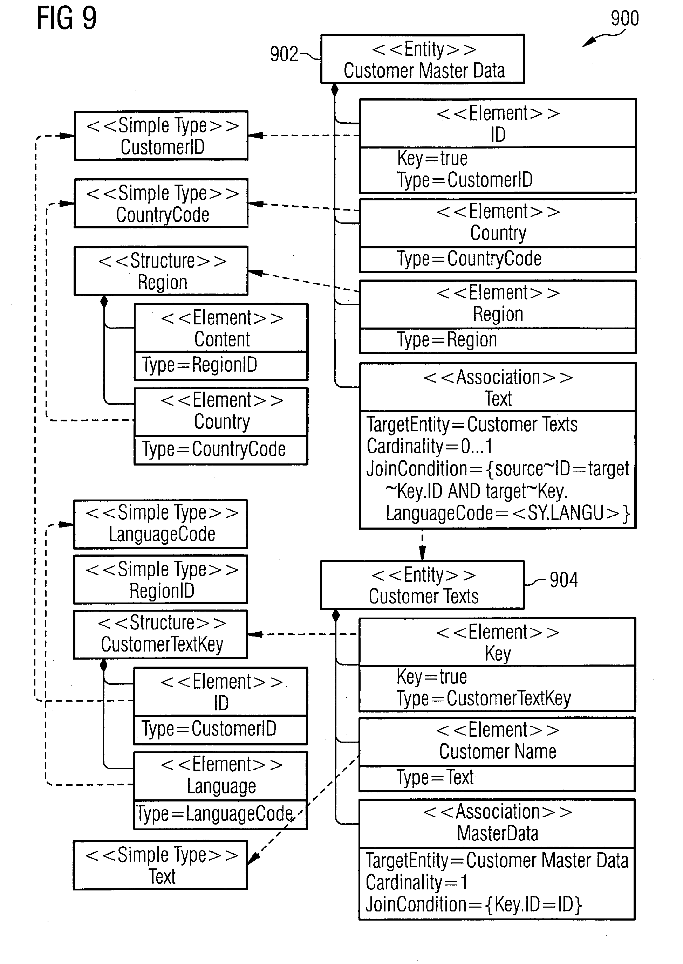

As an example of a core semantic consistent with implementations of the current subject matter, text values (e.g., "texts") in a multilingual system can typically be language dependent. This means that texts can be stored in a separate entity as opposed to being part of a data entity, which can optionally be a master data entity. The key of such a text entity can contain the key of the (master) data entity plus a language code element. The join between a (master) data entity and a text entity can be modeled as an association. For example, such an association can contain all key elements of the text entity except for an element with the semantic data type "language code." The role of the "language code" can already be defined if it is part of the text entity's key. The cardinality of this association can be "0...*". The Association can have an optional "language code" element bound to the "language code" element of the text entity's key. An advantage of this modeling can be in allowing the retrieval of texts in multiple languages at once. Alternatively, the association can be modeled as noted in the preceding example. However, the "language code" can be a mandatory part of the association definition. The cardinality in this example can be "0..1". The advantage of this approach is the correct modeling of the cardinality and the clear role of the "language code." FIG. 9 shows a mapping diagram 900 for an example model of a "customer master data" data entity 902 and a language dependent text entity called "customer texts" 904.

In modem business applications, many master data attributes and business configuration settings can be time dependent, for example to reproduce results of business logic or even repeat business process steps, which depend on these settings, at a later point in time. In some cases, a key of a time-dependent entity can contain an element with the semantic data type "to date" or "from date". Additionally, an entity can contain a non-key element with the opposite semantic. For example, a "from date" can be part of the key and a "to date" can be in the data area. Examples of time dependent associations can include evaluating an association using a constant date. As an example, this date is either Now() or a value the end user entered at runtime). Such an approach is typically used to join an entity without time dependency with time dependent master data. The join condition for this example can be expressed as MasterData.FromDate <= ConstantDate <= MasterData.ToDate. In another example, the association can be evaluated by comparing dates on both sides of the join. A simple example of this approach is a fact entity or view with a transaction data and a time dependent master data table. The join condition for this example can be expressed as MasterData.FromDate <= Facts.TransactionDate <= MasterData.ToDate. In yet another example, the association can be defined between two time dependent entities. In this case, only records with overlapping date intervals are returned. The result can have a validity interval defined as the intersection between the source validity intervals. In many cases, such an association can be used with a filter for a single validity date. In this case, the complexity reduces to first case. The join conditions can be expressed as Table1.FromDate <= Table2.ToDate AND Table2.FromDate <= Table1, and the validity of the result can be expressed as Result.FromDate = MAX{Table1.FromDate, Table2.FromDate} and Result.ToDate = MIN{Table1.ToDate, Table2.ToDate}. This type of join is widely used in the area of Human Capital Management.

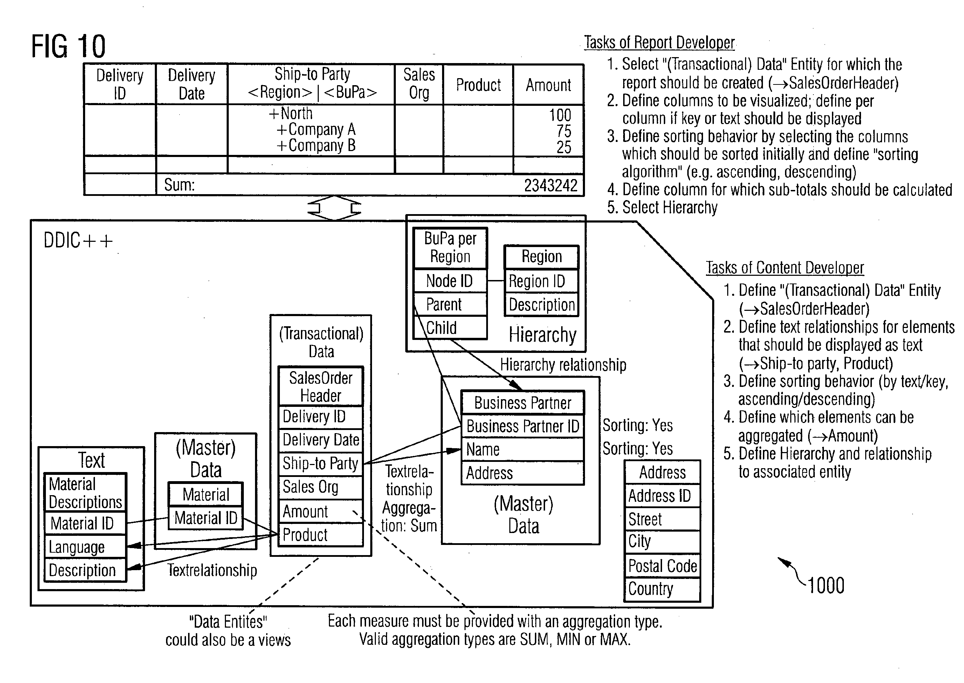

Reporting and analytical extensions can represent metadata that is relevant primarily for reporting and pure analytical scenarios. By enriching the core metamodel via these analytical extensions, it can be possible to generate an "ODP-like view" on the data "on the fly". This ODP view can then provide input both for the transactional query engine (for reporting scenarios) and for the analytical (OLAP) engine to execute specialized analytical queries on the data. Consistent with implementations of the current subject matter, these extensions need not be separate, standalone reporting and analytics screens or the like but can instead remain part of an application combining transactional and analytical aspects as discussed above. For example, "built-in" hierarchy and aggregation support can be useful for pure OLTP scenarios as well as analytical scenarios. FIG. 10 shows a relationship diagram 1000 illustrating example requirements for providing a "reporting/analytics" view for a list reporting scenario.

At an entity level, only a few extensions are likely to be necessary consistent with some implementations of the current subject matter. Firstly, data can be categorized into "data", "texts" and "hierarchy structure" data category extensions. A "data" data category extensions can stand for master data and transactional data. The data category extensions "texts" and "hierarchy structure" can be used to separate between reportable data and entities that are purely used to enrich other data. Typically, reporting is not performed directly on a language dependent text table or on a table containing a complex hierarchy structure. A further use case for this categorization can be the support of implicit runtime behavior in a query language. For example, a join between a "data" entity and a "text" entity performed without explicit language key handling can be interpreted as a 1:1 association where the language key is defaulted with the logon language. Similarly, selections on keys of a hierarchy node entity can be interpreted as a hierarchy node selection in certain contexts.

A reporting and analytical entity extension can have an ODP indicator and a replication indicator. The ODP indicator can be useful to filter the typically large list of entities for those relevant for reporting and analysis. The Replication indicator can allow an application developer or the like to mark those entities that are suitable for data replication (e.g., for mass data it can be necessary to provide delta capabilities).

A reporting and analytical element extension can distinguish between characteristics and key figures and specify the Aggregation Behavior of the key figure. Possible values can include "None", "Sum", "Min", "Max" or "Formula". An element can be a characteristic automatically if the aggregation behavior is "None". Aggregation behavior can serve as a default when a view is accessed in a way, which can require aggregation. As an example, without a defined aggregation behavior a view on line items can always return the same number of data records for a given selection, no matter if the item number/ID is requested or not, which can result in duplicate keys in the result set. Once the aggregation behavior of the key figures in the item view is defined, the runtime can return a condensed result set as a response to the same (simple) request, due to an implicit extension of the processed SQL statement.

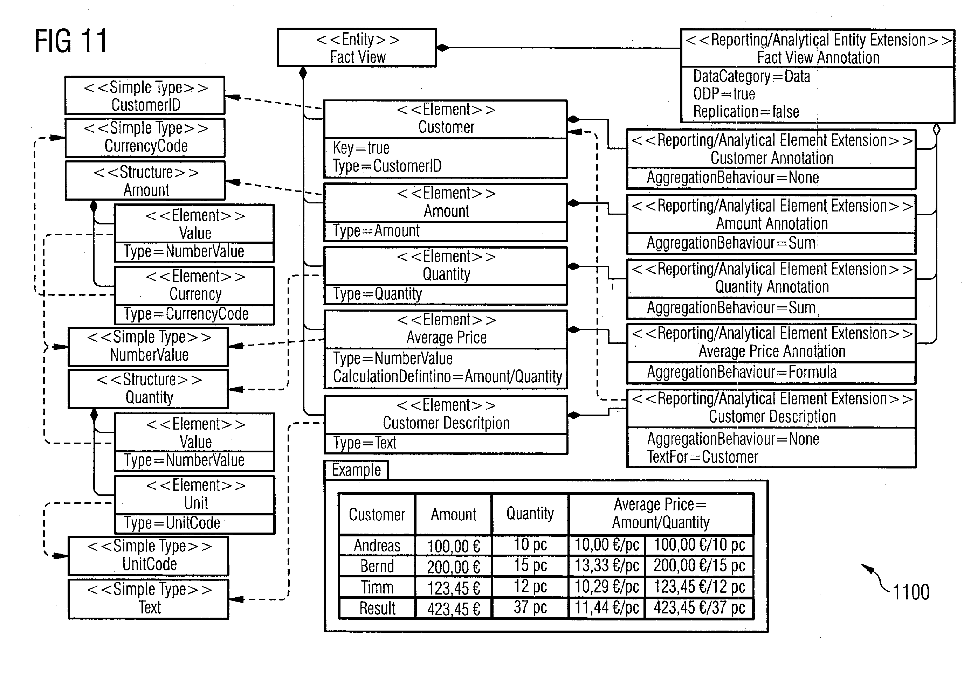

The diagram 1100 of FIG. 11 illustrates an example of two summable key figures ("Amount" and "Quantity") grouped by "customer". The forth Element is the formula "Average Price", which is the quotient of "Amount" and "Quantity". It is annotated with the aggregation Behavior "Formula". In the result line the formula is calculated based on the result line values of "Amount" and "Quantity." In case of an entity or view representing master data or transactional data that already contains the "text" element together with the "key" element, those two elements can optionally be linked via the extension TextFor.

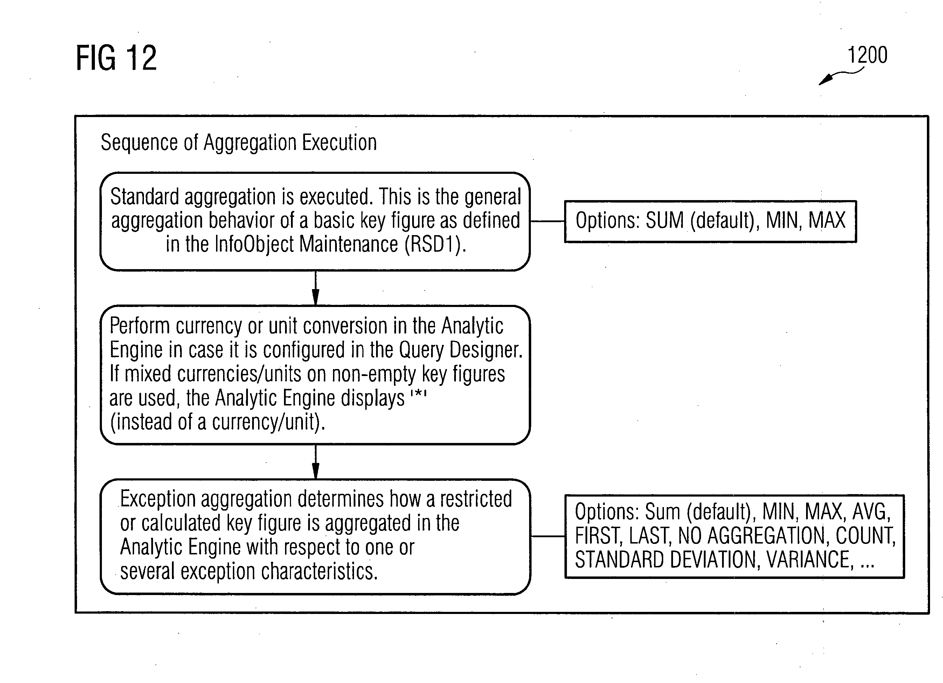

Aggregation behavior can determine whether and how key figure values are aggregated in reports. Exception aggregation can be optional and can in some implementations of the current subject matter be used only to express special business requirements. Exception aggregation can define how a key figure is aggregated using one or more reference characteristics. Application cases for exception aggregation can include warehouse stock, which cannot be added up over time, or counters that count the number of characteristic values for a certain characteristic. FIG. 12 shows a flow diagram 1200 illustrating an example sequence of aggregation execution.

Multiple exception aggregations at the same key figure are possible. For example, the maximum of the average of a formula can be calculated. In general, different aggregation rules do not interchange. For example, the maximum of an average can give different results compared to the average of a maximum. Thus, it is necessary to allow modeling of the exception aggregation behavior by allowing the specification of one or more exception aggregation steps and, for example, by specifying the calculation order using a StepNumber attribute or the like. In some cases aggregation can be multidimensional. For example, a count can be performed distinct of material/customer combinations. To support this case, the referenced element for the exception aggregation step can be a list.

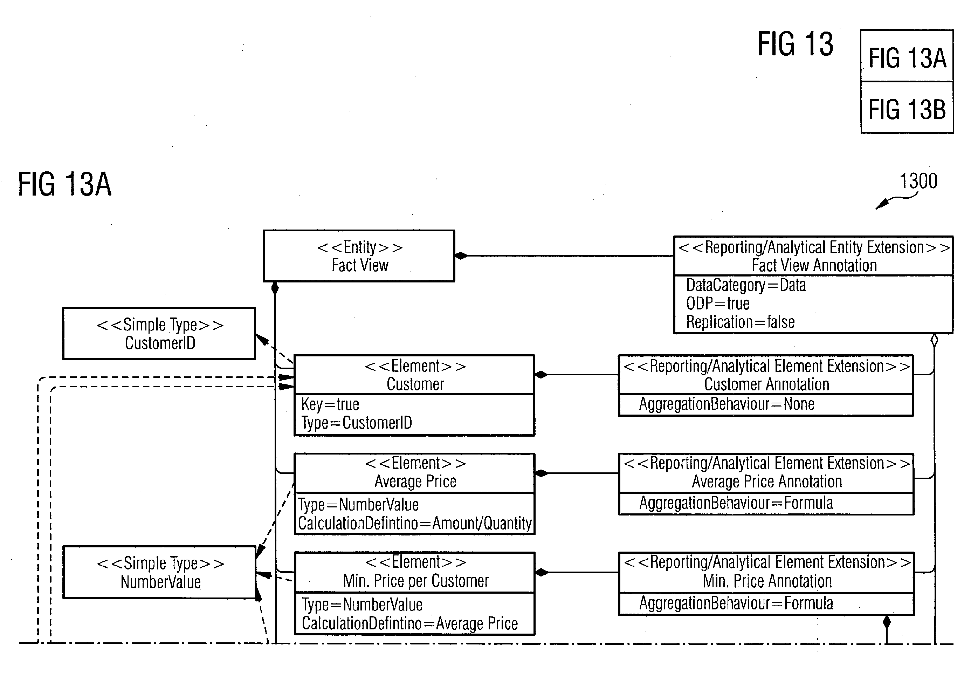

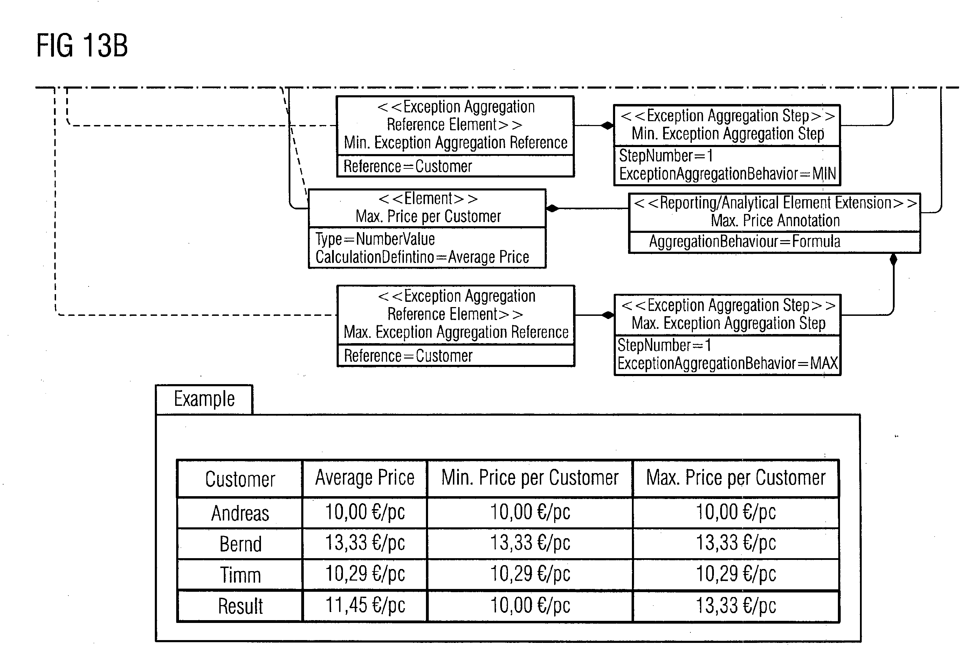

FIG. 13 shows a diagram 1300 illustrating features of an example of "exception aggregation" modeling in more detail. Continuing the example of aggregated "Amounts", "Quantities" and "Average Price" per "Customer" above, the underlying entity can be extended by two additional key figures: "Min Price per Customer" and "Max price per customer" as originating from copies of the calculated measure "Average Price." These two new key figures can contain the same values. An exception aggregation step can be defined, namely: MIN for "Min. Price..." and MAX for "Max. Price...". In both cases, the referenced element can be "Customer." As a result, the data grouped by "Customer" shows that the exception aggregation has no effect, because the calculation and the aggregation behavior 'below' "Customer" is exactly the same as for the "Average Price." However, the result line can be aggregated over "Customer." Here, the exception aggregation "MIN"/"MAX" overrules the standard aggregation "FORMULA".

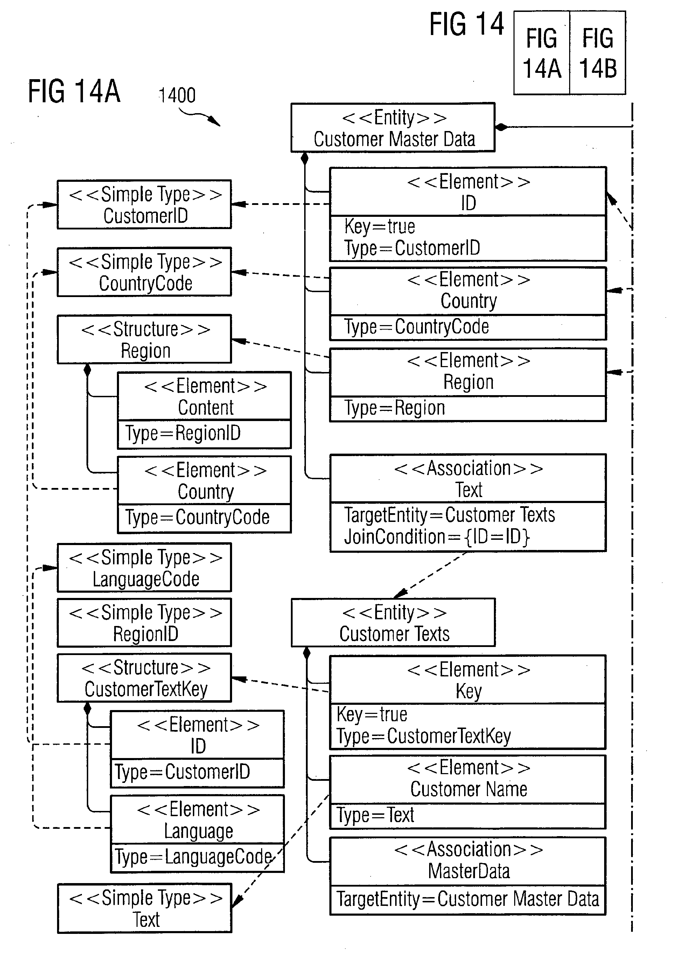

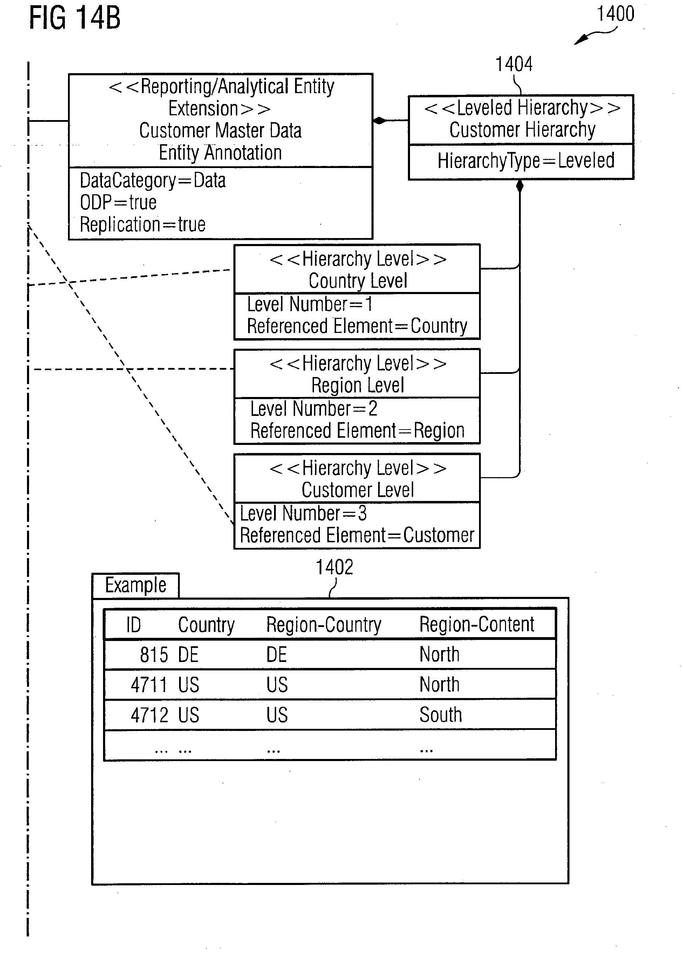

An attribute view can have multiple hierarchies with different types. As a consequence, a reporting and analytical entity extension can have any number of hierarchy extensions. An instance of hierarchy extensions can be one of the tree types "leveled", "parent-child" or "external." The "leveled" and the "parent-child" hierarchy can be based directly on the master data table. The hierarchies can be time dependent if the master data table is time dependent. The "external" hierarchy can store nodes and edges in a separate table. Here, the time dependency of the hierarchy can be modeled independently from the master data table. A leveled hierarchy can be defined through a list of levels. Each level can be the combination of a level number and a reference to an element of the entity. FIG. 14 shows a diagram illustrating features of an example of a master data table 1400 with a text table 1402 and a leveled hierarchy extension 1404.

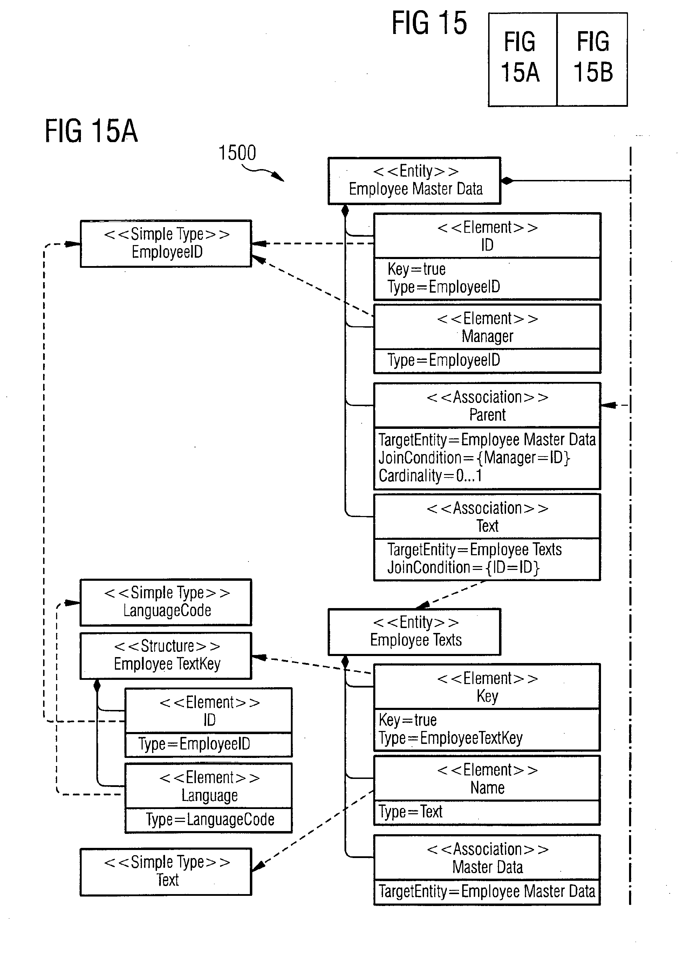

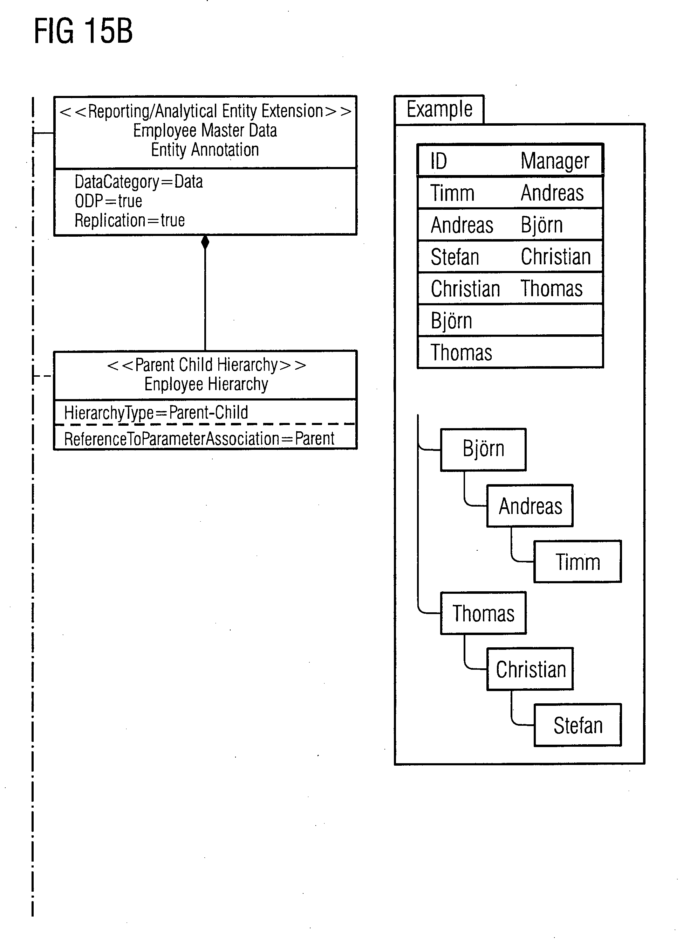

A parent-child hierarchy can be based on an association between instances of the same entity. A simple example of a parent-child hierarchy can be "employee" master data. A "manager" is also an "employee" and almost every "employee" is assigned to a "manager." The diagram 1500 of FIG. 15 shows an example of such a hierarchy.

An external hierarchy is generally not stored in the master data table. The master data table typically just contains the leaves of the hierarchy. The hierarchy nodes and edges are instead stored in a separate set of tables. The hierarchy extension merely points to the entity containing the hierarchy structure (e.g., via a reference to hierarchy structure extension). The "hierarchy structure" entity can have a hierarchy structure entity annotation, which holds the information about a parent association, a next association and a reference to the element in the hierarchy structure entity that identifies the node type of each instance (e.g., via a node type identifier element attribute). A "hierarchy structure" entity with an association to a hierarchy header (e.g., defined via a header association) can hold several hierarchies at the same time. The hierarchy header can be a "(master) data" entity together with an optional "text" entity.

The hierarchy can contain several different node types. For example, a "regional" hierarchy typically contains "country" and "region". Only the keys of such nodes appear in the hierarchy structure. Texts and display attributes are taken from the corresponding "(master) data" and "text" entities. For this purpose, an association between the hierarchy structure and the "(master) data" or "text" entity is needed.

If the associations are defined, it cannot be decided for an instance of the "hierarchy structure" entity what is the correct association to navigate to the master data. So the question is how to know that a particular instance is a "region" or a "country". This is why the hierarchy structure entity extension refers to a node type identifier element. The hierarchy structure entity extension contains a collection of external hierarchy node type extensions. Each is a pair of a value for the node type identifier and the corresponding association of this node type.

In the above example, the external hierarchy node type extension contains the node type identifier "region" and a reference to the association from the "hierarchy structure" entity to the "region" (master) "data" entity. The hierarchy structure contains again a column for the node type and every row with value "region" in this column is interpreted as "region".

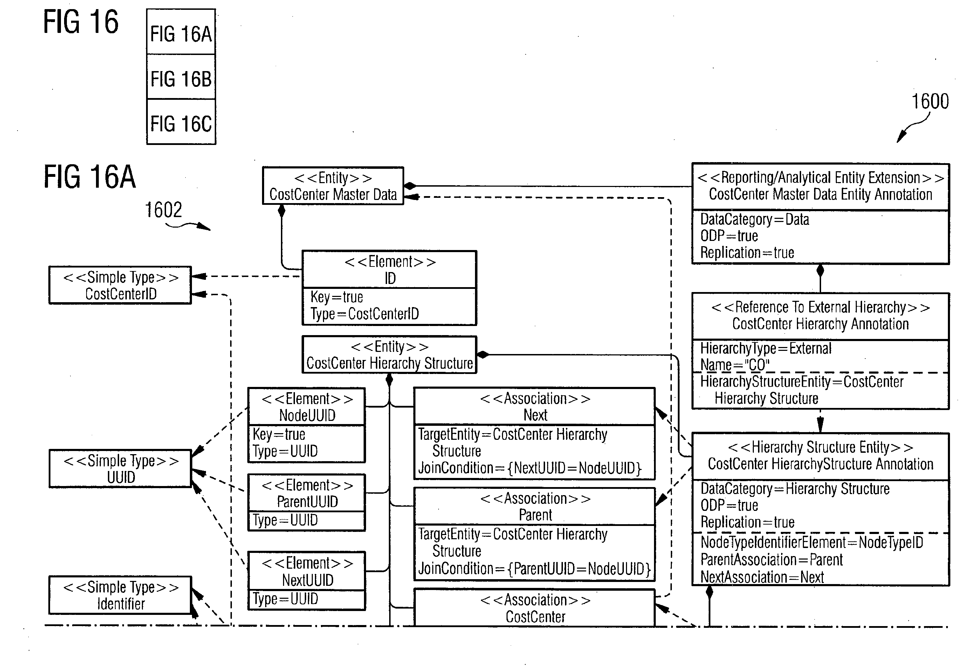

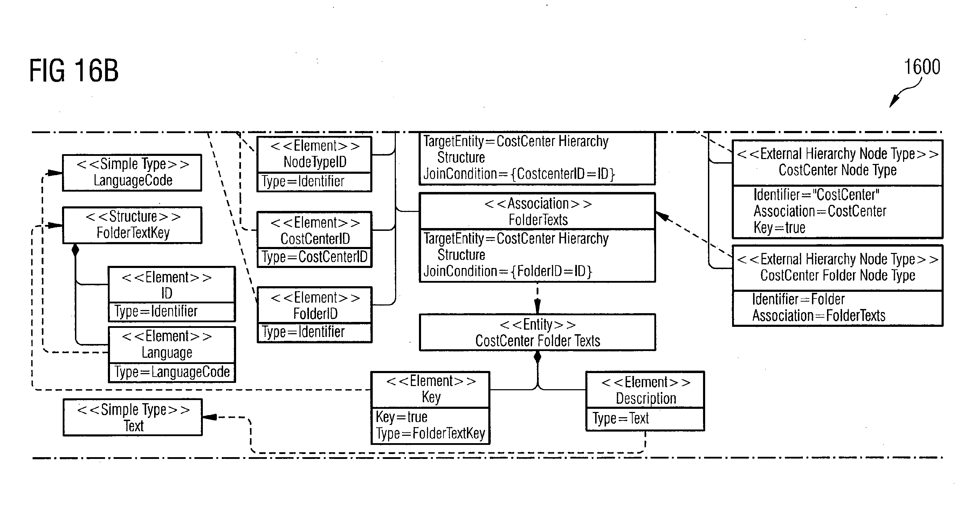

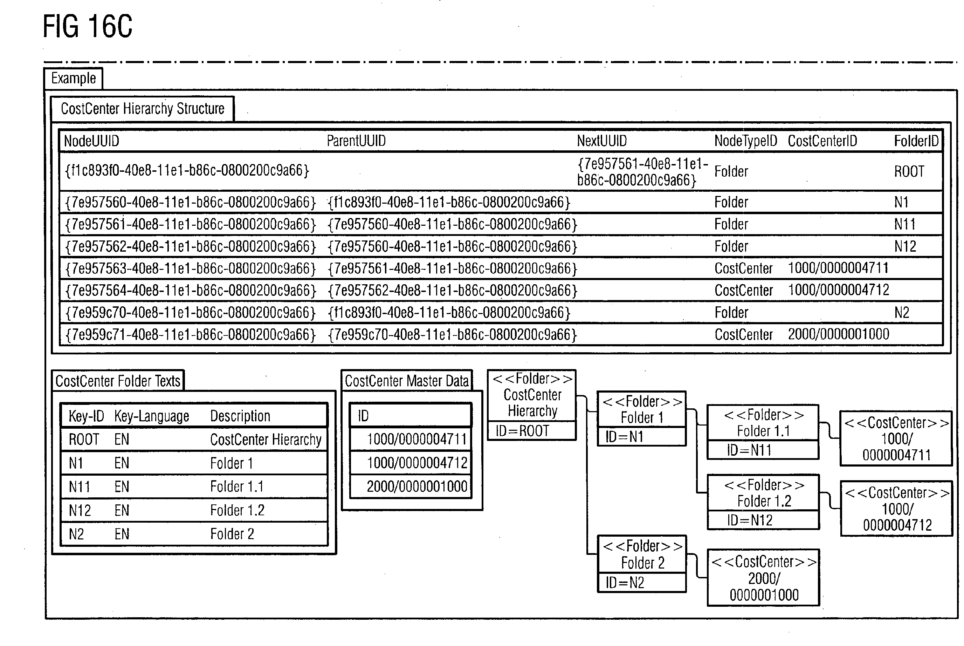

The diagram 1600 of fig. 16 shows an example of an external hierarchy structure. The hierarchy is based on "cost center" master data. Additionally to the "cost center" it contains the second node type "folderid." As such, the instances of entity "costcenter hierarchy structure" are either "folders" or "cost centers." The elements of the "hierarchy structure" entity are just examples and only necessary to model the associations. Application developers can choose their own elements and types.

"Time-dependent hierarchies" can be hierarchies in which the assignment of nodes to parent nodes (or levels) is time-dependent. To the extent that a same entity/view can carry elements on the node assignments ("hierarchy edges"), this covers time-dependent elements of hierarchy edges. As hierarchies are modeled as regular entities and views, the regular concepts of time dependence apply. Time-dependence can be indicated by using the appropriate semantic data types "from date" and/or "to date" in the view/entity.

In the example of a "parent-child" hierarchy, two new elements can be included into the "employee master data" entity: "valid from" of type date from and "valid to" of type date to. In case there are more elements of these semantic data types in the same entity, "projection" views can to be created where the semantics of "from-date" and "to-date" is unique. This data model extension can be both necessary and sufficient to define the hierarchy as time-dependent in all design time and runtime contexts.

In some examples, a reference time is not a constant for a given read request, but is contained in the data records themselves. As used herein, a reference time can be defined via a query "key date", or via an explicit restriction, and can serve as an evaluation point for time-dependent hierarchies. For example in a "headcount" report comparing two points in time with a re-organization in between, the "direct reports" of a given "manager" are different for the two points in time. In this case, a reference time can be applied, but now it may be specific per data record.

An innovative aspect of the common core metamodel described herein can be the conception of views as specialized entities, and thus the full interoperability of entities and views for the consumer (including business software frameworks and ABAP developers). Consequently, the consumption-relevant metadata and especially the reporting and analytics extensions discussed above can be defined in a way that they are applicable to both entities and views in the same way. In this programming model it is therefore possible for the developer to enable many of his/her entities for analytics directly, without creating any additional design time objects.

In ERP tables, the transactional data can typically be stored without redundancies. This goes so far that rather fundamental business configuration, which is stored as part of the master data, is not repeated in transactional data, even if this implies that the transactional data itself is not technically self-contained.

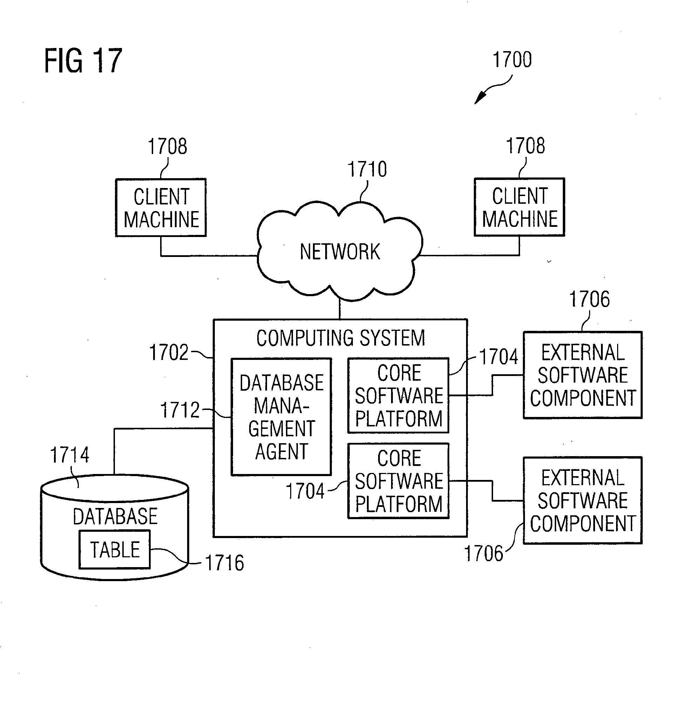

FIG. 17 shows a diagram of a system that can implement one or more features of the current subject matter. A computing system 1702 can include one or more core software platform modules 1704 providing one or more features of a business software system or other software that includes database management features. The computing system can also aggregate or otherwise provide a gateway via which users can access functionality provided by one or more external software components 1706. One or more client machines 1708 can access the computing system, either via a direct connection, a local terminal, or over a network 1710 (e.g., a local area network, a wide area network, a wireless network, the Internet, or the like).

A database management agent 1712 or other comparable functionality can access a database 1714 that includes at least one table 1716, which can in turn include at least one column. The database management agent 1712 can implement one or more of the features of implementations discussed herein. The database table can store any kind of data, potentially including but not limited to definitions of business scenarios, business processes, and one or more business configurations as well as transactional data, metadata, master data, etc. relating to instances or definitions of the business scenarios, business processes, and one or more business configurations, and/or concrete instances of data objects and/or business objects that are relevant to a specific instance of a business scenario or a business process, and the like.

One potential use for various implementations of the current subject matter can include handling of the database demands of an enterprise resource planning (ERP) system, other business software architecture, or other data-intensive computing application or software architecture. Such applications can, in some examples, be provided as a standalone, customized software installation that runs on one or more processors that are under the control of a specific organization. This arrangement can be very effective for a large-scale organization that has very sophisticated in-house information technology (IT) staff and for whom a sizable capital investment in computing hardware and consulting services required to customize a commercially available business software solution to work with organization-specific business processes and functions is feasible. The diagram of FIG. 1 depicts an example of such a system.

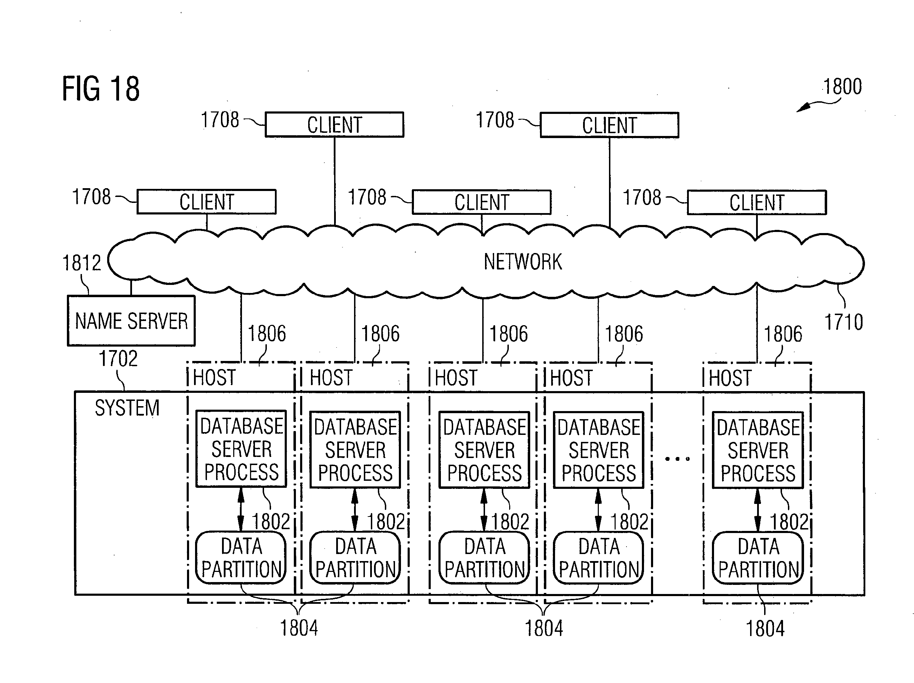

Alternatively or in addition, tables or ranges within tables can be assigned to different database partitions that are assigned to different hosts, for example data distribution and/or scalability reasons. FIG. 18 shows an example of an enterprise resource planning system architecture 1800 consistent with an implementation that includes data distribution for scalability reasons. Such a configuration can be used for large, on-premise or stand-alone systems with high performance requirements. Each data server process 1802 and its associated data partition 1804 can be assigned to a discrete host 1806. A host 1806 can be a standalone machine with one or more physical processors or a virtual machine on a larger system 1702 as depicted in FIG. 18. A central component, labeled as a name server 1812 in FIG. 18, knows the topology of the system and how data is distributed. In a system with data distribution, the name server knows which tables or partitions of tables are located on which data server process 1802. One or more clients 1814 (e.g., client machines 1708) can access the name server 1812, either via a direct connection or over a network 1816.

In a data distribution scenario, the partitioning can be done table-wise or also by splitting tables. With table-wise partitioning, the name server assigns new tables to a database server process 1802 based on the current distribution of tables (number of tables assigned to each database server process 1802). Then data for this table will reside only on that database server process 1802. It is also possible to specify that a table is split over multiple database server processes 1802. The name server 1812 can optionally partition the table based on a size estimation specified by the application. When records are inserted into a split table, the records can be distributed to other database server processes 1802 based on name server information.

Smaller organizations can also benefit from use of business software functionality. However, such an organization may lack the necessary hardware resources, IT support, and/or consulting budget necessary to make use of a standalone business software architecture product and can in some cases be more effectively served by a software as a service (SaaS) arrangement in which the business software system architecture is hosted on computing hardware such as servers and data repositories that are maintained remotely from the organization's location and accessed by authorized users at the organization via a thin client, such as for example via a web browser, over a network.

In a software delivery configuration in which services of an business software system are provided to each of multiple organizations are hosted on a dedicated system that is accessible only to that organization, the software installation at the dedicated system can be customized and configured in a manner similar to the above-described example of a standalone, i.e., customized software installation running locally on the organization's hardware. However, to make more efficient use of computing resources of the SaaS provider and to provide important performance redundancies and better reliability, it can be advantageous to host multiple tenants on a single system that includes multiple servers and that maintains data for all of the multiple tenants in a secure manner while also providing customized solutions that are tailored to each tenant's business processes.

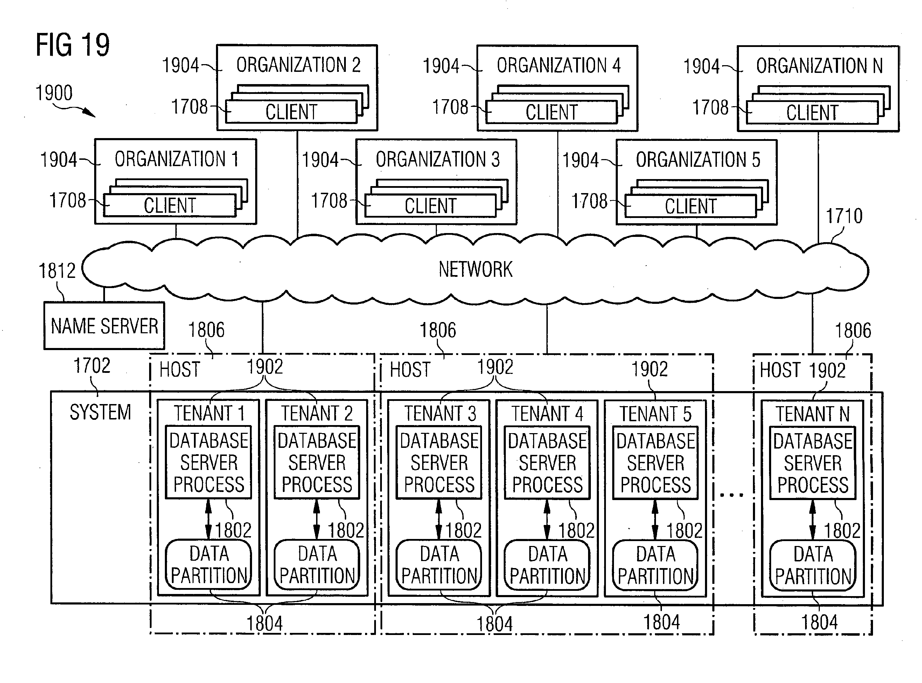

Data partitioning consistent with implementations of the current subject matter can also be used in a multi-tenancy environment as illustrated in the system architecture 1900 of FIG. 19. Multiple tenants 1902, each isolated from one another and available to be accessed by clients 1814 within a separate organization 1904 of a plurality of organizations via a network 1816 can be hosted by a same host 1806, which can be a virtual machine on a larger system 1702 as shown in FIG. 19 or a separate system that includes one or more physical processors. Tenants 1902 can also optionally be distributed across multiple database server processes 1802 on more than one host 1806. In this manner, tables or ranges within tables are assigned to different database server processes 1802 that are assigned to different hosts 1806 for scalability reasons. One or more tenants 1902 can alternatively be served by a single database server process 1802 accessing a data partition 1804 (or multiple data partitions 1804) for the respective tenant 1902 that is isolated from other tenants 1902.

To provide for customization of the business process for each of multiple organizations supported by a single software delivery architecture, the data and data objects stored by a database management system can include three types of content: core software platform content (e.g., a standard definition of a business process), system content, and tenant content. Core software platform content includes content that represents core functionality and is not modifiable by a tenant. System content can in some examples be created by the runtime of the core software platform and can include core data objects that store concrete data associated with specific instances of a given business process and that are modifiable with data provided by each tenant. The data retained in these data objects are tenant-specific: for example, each tenant of the group of tenants can store information about its own inventory, sales order, etc. Tenant content is isolated to each tenant of the group of tenants and includes data objects or extensions to other data objects that are customized for one specific tenant of the group of tenants to reflect business processes and data that are specific to that specific tenant and are accessible only to authorized users at the corresponding tenant. Such data objects can include a key field (for example, "client" in the case of inventory tracking) as well as one or more of master data, business configuration information, transaction data or the like. For example, tenant content can reflect tenant-specific modifications or changes to a standard template definition of a business process as well as tenant-specific customizations of the business objects that relate to individual process step (e.g., records in generated condition tables, access sequences, price calculation results, other tenant-specific values, or the like). A combination of the software platform content and system content and tenant content of a specific tenant of the group of tenants are accessed to provide the business process definition and/or the status information relating to a specific instance of the business process according to customizations and business data of that tenant such that each tenant of the group of tenants is provided access to a customized solution whose data are available only to users from that tenant.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. A system comprising:
at least one programmable processor; and
a machine-readable medium storing instructions that, when executed by the at least one programmable processor, cause the processor to perform operations comprising:
defining, via a core metamodel, metadata specifying a data part of a business obj ect and one or more information providers that directly consume data from at least one database table underlying the business object, the one or more information providers comprising at least one of an analytical view and an attribute view;
providing access to the core metamodel via a central integration component of a database application;
receiving, at the central integration component, an access request, the access request comprising at least one of a pure transactional request, an integrated transactional and reporting and analytical request, and a pure reporting request; and
responding to the access request using the core metamodel, the responding comprising providing access to the business object when the access request comprises the pure transactional request, implementing the one or more information providers as needed for interpreting only the metadata relevant to the access request when the access request comprises the integrated transactional and reporting and analytical request, and allowing direct consumption of the at least one database table underlying the business object when the access request comprises the pure reporting request.

2. A system as in claim 1, wherein the core metamodel defines both entities and views and offers a harmonized access to the entities and views.

3. A system as in claim 1 or 2, wherein the core metamodel is natively supported by a data dictionary-like functionality of a database access architecture.

4. A system as in any one of the preceding claims, wherein the core metamodel comprises a definition of a data part of the business object and the one or more information providers.

5. A system as in any one of the preceding claims,, wherein the core metamodel comprises an extension for supporting one or more reporting and analytical scenarios.

6. A system as in any one of the preceding claims, wherein the core metamodel comprises artifacts that are tenant-specific and therefore not visible from within other tenants in a multi-tenant environment.

7. A computer-implemented method comprising a machine-readable medium storing instructions that, when executed by at least one programmable processor, cause the at least one programmable processor to perform operations comprising:
defining, via a core metamodel, metadata specifying a data part of a business object and one or more information providers that directly consume data from at least one database table underlying the business object, the one or more information providers comprising at least one of an analytical view and an attribute view;
providing access to the core metamodel via a central integration component of a database application;
receiving, at the central integration component, an access request, the access request comprising at least one of a pure transactional request, an integrated transactional and reporting and analytical request, and a pure reporting request; and
responding to the access request using the core metamodel, the responding comprising providing access to the business object when the access request comprises the pure transactional request, implementing the one or more information providers as needed for interpreting only the metadata relevant to the access request when the access request comprises the integrated transactional and reporting and analytical request, and allowing direct consumption of the at least one database table underlying the business object when the access request comprises the pure reporting request.

8. A computer-implemented method as in claim 7, wherein the core metamodel defines both entities and views and offers a harmonized access to the entities and views.

9. A computer-implemented method as in claim 7 or 8, wherein the core metamodel is natively supported by a data dictionary-like functionality of a database access architecture.

10. A computer-implemented method as in any one of claims 7 to 9, wherein the core metamodel comprises a definition of a data part of the business object and the one or more information providers.

11. A computer-implemented method as in any one of claims 7 to 10, wherein the core metamodel comprises an extension for supporting one or more reporting and analytical scenarios.

12. A computer-implemented method as in any one of claims 7 to 11, wherein the core metamodel comprises artifacts that are tenant-specific and therefore not visible from within other tenants in a multi-tenant environment.

13. A computer-implemented method as in any one of claims 7 to 12, wherein at least one of the defining, the providing, the receiving, and the responding are performed by a system comprising a programmable processor.

14. A computer program product comprising a machine-readable medium storing instructions that, when executed by at least one programmable processor, cause the at least one programmable processor to perform operations according to any one of claims 7 to 12.
